# EUROPEAN PATENT APPLICATION

(11) **EP 2 463 070 A1**
(43) Date of publication of application: **13.06.2012**
(21) Application number: 10806064.1
(22) Date of filing: 09.08.2010
(51) Int. Cl.: B27B 19/06

(54) **CUTTING MACHINE**

(30) Priority: 07.08.2009 CN 200910163870; 30.06.2010 CN 201010225015; 12.07.2010 CN 201010234718
(71) Applicant: Positec Power Tools (Suzhou) Co., Ltd, Suzhou, Jiangsu 215123 (CN)
(72) Inventor: BROWN, Warren, Mount Evelyn Victoria 3796 (AU); GERHARDT, Graham, Warrandyte Victoria 3133 (AU); SZOMMER, Harry, Victoria 3806 (AU); CHEN, Guojun, Suzhou Jiangsu 215123 (CN); LONG, Jun, Suzhou Jiangsu 215123 (CN)
(74) Representative: Stuttard, Garry Philip
(86) International application number: PCT/CN2010/075813
(87) International publication number: WO 2011/015160

(57) **Abstract**

The present invention provides a cutting machine, comprising: a worktable including an opening and an upper surface for supporting a workpiece; a supporting unit for supporting the worktable; a cutting mechanism mounted on a lower surface of the worktable and received in the supporting unit comprising: a motor for outputting a rotation motion; a reciprocating rod driving a saw blade moving reciprocately through the opening; a motion conversion mechanism converting the rotation motion of the motor into a reciprocating motion of the reciprocating rod; and a saw blade clamp for clamping and releasing the saw blade. The present invention fixes the jig saw under the lower surface of the worktable, user can move the workpiece to be cut, that can save time and labor and with high cutting precision.

## Description

### TECHNICAL FIELD

The invention relates to a cutting machine with a reciprocating cutting mechanism.

### BACKGROUND OF THE INVENTION

The existing jig saws are able to carry out all kinds of curved and linear cutting and therefore are widely applied in plate processing of various materials. Usually, a jig saw comprises a motor, a housing holding the motor, a motion conversion mechanism that is housed in the gearbox housing, driven by the motor and converting the rotation motion of the motor into the reciprocating motion of a reciprocating rod, a saw blade connecting to the reciprocating rod via a clamp, and a bottom plate supporting the jig saw body on the surface of a workpiece.

Usually before using this kind of jig saw, user will fasten the workpiece, and move the jig saw to cut the workpiece, but inconvenient application of force and vibration of the saw blade during cutting lead to low cutting precision, and the situation of moving the workpiece during cutting also brings inconvenience.

### SUMMARY OF THE INVENTION

One object of the present invention is to provide a cutting machine with high precision and easy operation.

In order to realize the above object, the present invention provides a cutting machine, comprising: a worktable including an opening and an upper surface for supporting a workpiece; a supporting unit for supporting the worktable; a cutting mechanism mounted on a lower surface of the worktable and contained within the supporting unit comprising: a motor for outputting a rotation motion; a reciprocating rod driving a saw blade moving reciprocately through the opening; a motion conversion mechanism converting the rotation motion of the motor into a reciprocating motion of the reciprocating rod; and a saw blade clamp for clamping and releasing the saw blade.

As a further improvement of the above proposal, the whole weight of the cutting machine is less than 15kg.

As a further improvement of the above proposal, the worktable is made of metal, and the whole weight of the worktable is less than 2kg.

As a further improvement of the above proposal, the area of the upper surface is less than 0.18m2, the distance from the surface of the supporting unit opposite to the worktable to the upper surface is less than 0.3m.

As a further improvement of the above proposal, the weight of the supporting unit is less than 2kg.

As a further improvement of the above proposal, the cutting machine comprises a guard assembly mounted on the upper surface, a pressing plate assembly disposed on the guard assembly, the whole weight of the guard assembly and the pressing plate assembly is less than 1kg.

As a further improvement of the above proposal, the guard assembly has a farthest end which is farthest to the worktable, the distance from the farthest end to the surface of the supporting unit opposite to the worktable is not more than 0.37m.

The present invention also provides a cutting machine, comprising: a worktable including an opening and an upper surface for supporting a workpiece; a base has a bottom surface; supporting walls disposed between the worktable and the base, the supporting walls have outer surface; a cutting mechanism mounted on a lower surface of the worktable and received in the supporting walls comprising: a motor for outputting a rotation motion; a reciprocating rod driving a saw blade moving reciprocately through the opening; a motion conversion mechanism converting the rotation motion of the motor into a reciprocating motion of the reciprocating rod; and a saw blade clamp for clamping and releasing the saw blade; the distance from the gravity centre of the cutting machine to at least one of the upper surface, the bottom surface and outer surface is not more than 240mm.

As a further improvement of the above proposal, the cutting machine further comprises a handle portion, when the cutting machine is lift through the handle portion, the distance from any point of the connecting line that is formed by linking from the gravity centre with the stressing point of the handle portion to the upper surface or the bottom surface is not more than 100mm.

As a further improvement of the above proposal, when the cutting machine is lifted through the handle portion, the connecting line is parallel to the upper surface or the bottom surface.

As a further improvement of the above proposal, the handle portion is positioned on the supporting wall, the handle portion has a gripping portion which extends longitudinally, the extension direction of the gripping portion is at least parallel to one of the upper surface, the bottom surface and the outer surface.

As a further improvement of the above proposal, the distance from the gravity centre of the cutting machine to the bottom surface is not more than 100mm; the extension direction of the gripping portion is parallel to the bottom surface.

As a further improvement of the above proposal, a guard assembly is detachablly disposed on the worktable.

As a further improvement of the above proposal, when the guard assembly is disassembled from the worktable, the distance from the gravity centre of the cutting machine to the upper surface is not more than 100mm; the extension direction of the gripping portion is parallel to the upper surface.

As a further improvement of the above proposal, the handle portion is disposed on a supporting wall, the distance from the gravity centre of the cutting machine to the abut supporting wall which is disposed adjacent to the supporting wall that the handle portion is not more than 100mm; the handle portion has a gripping portion which extends longitudinally, the extension direction of the gripping portion is parallel to the abut supporting walls.

Compare to the traditional technical, the present invention fixes the jig saw under the lower surface of the worktable, user can move the workpiece to be cut, that can save time and labor and with high cutting precision.

### BIREF DESCRITION OF THE DRAWINGS

FIG. 1 is a schematic view of the cutting machine by one embodiment of the present invention;
FIG. 2 is a cross sectional view of the cutting machine in FIG. 1;
FIG. 3 is an exploded view of the worktable of the cutting machine in FIG. 1;
FIG. 4 shows a schematic view of the carrying of the cutting machine in FIG. 1;
FIG. 5 shows a schematic view of the carrying of the cutting machine in another embodiment of the present invention;
FIG. 6 shows a schematic view of the cutting machine in another embodiment of the present invention.

### DESCRIPTION OF THE PREFERRED EMBODIMENT

As shown in attached drawings 1-2, the first embodiment of the present invention provides a cutting machine 20 comprising a worktable 22, a supporting unit 24 for supporting the worktable 22, a guard assembly 30 disposed on the worktable 22, a pressing plate assembly 32 connecting to the guard assembly 30 and adjustably applying a certain pressure onto a workpiece, and a cutting mechanism 26 disposed on the lower surface 38 of the worktable 22.

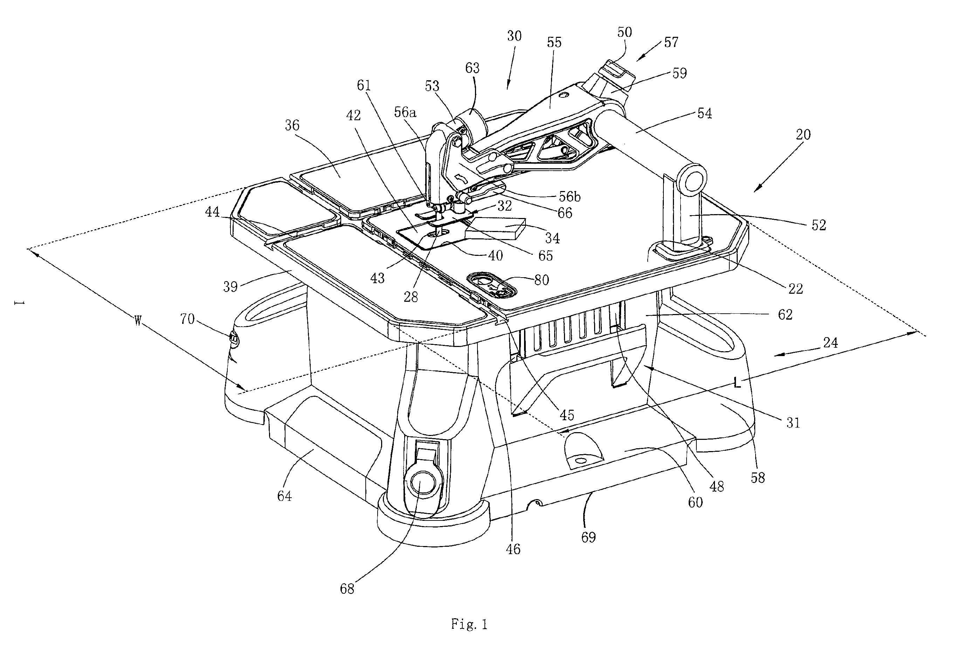

According to the use habits of the operators, the left side of the figure 1 is defined as the front portion of the cutting machine 20, while the right side is defined as the rear portion of the cutting machine 20. The worktable 22 has an upper surface 36, lower surface 38, and sidewalls 39 that extend vertically with respect to the upper and lower surfaces 36 and 38. An opening 40 is formed on the worktable 22, positioned on the front portion of the cutting machine 20 and passing through the upper surface 36 and the lower surface 38 from the upside down. A saw blade 28 passes through the opening 40 from the bottom up. A workpiece 34 is capable of being disposed on the upper surface 36 of the worktable 22, moving along the upper surface 36 to pass through the saw blade 28 so as to be cut by the saw blade 28. The opening 40 is approximately square. A square blade protecting plate 42 is capable of being embedded into the opening 40 for preventing dust front entering the cutting machine 20 to a certain extent, and when the saw blade 28 is broken, the protecting plate 42 is capable of being dismantled, so the operator can take out the saw blade 28 from the opening 40. A slot 43 is formed in the middle of the protecting plate 42, and the saw blade 28 passes through the slot 34.

The guard assembly 30 comprises a bracket 52 detachably connected to the worktable 22, an extending arm 54 vertical to the bracket, and an extending guard 55 connected to the extending arm 54, left and right guard plates 56a and 56b, and a guard body 53. A guard clamping mechanism 57 with a clamping knob 50 adjustably fastens a portion guard 59 on the extending arm 54. A guide wheel 61 is disposed below the guard body 53 for guiding the reciprocating motion of the saw blade 28. A dust collecting hose 63 is disposed above the guard body 53 for externally connecting with a dust collector and collecting the dust generated during cutting.

Varying with the thickness of the workpiece 34, the extending guard 55 rotates at a certain angle with respect to the extending arm 54 to adjust the height of the guard body 53 with respect to the worktable 22, to cut the workpiece. Limited by the length of the saw blade 28, one end, away from the cutting mechanism 26, of the saw blade 28 must be received in the guard body 53 and guided by the guide wheel 61 during cutting. Otherwise, the operation has potential safety hazards and threatens the safety of the operator. Therefore, the extending guard 55 rotates at a certain angle scope with respect to the extending arm 54, to form the farthest end from the extending guard 55 to the worktable 22 and the farthest portion away from worktable 22. In this embodiment, when the extending guard 55 swings to the farthest end, the distance from the farthest portion of the worktable 22 to the surface, opposite to the worktable 22, of the supporting unit 24 is 0.37m, which means that when the extending guard 55 rotates to other angles with respect to the extending arm 54, the distances from the farthest portion thereof to the surface, opposite to the worktable 22, of the supporting unit 24 all are less than 0.37m. A pressing plate assembly 32 is positioned between the guard assembly 30 and the worktable 22 to adjust height of a pressing plate 65 with respect to the worktable 22 by rotating an adjusting wrench 66.

The whole weight of the guard assembly 30 and the pressing plate assembly 32 is less than 1 kg, preferably, the guard assembly 30 is made from a light material, while the pressing plate assembly 32 is made from a durable and solid material. In this embodiment, the pressing plate assembly 32 is made of iron, the integral weight of the guard assembly 30 and the pressing plate assembly 32 is 0.75kg, so the guard assembly 30 and the pressing plate assembly 32 are light in weight and low in cost and not readily able to damage the tabletop of the worktable 22 after being mounted on the worktable 22; besides, the pressing plate assembly 32 is made of iron and therefore has high wear resistance, and the body has a long service life.

It is known that the guard assembly 30 has a wide scope of material options and has a plurality of elements, and the element materials are different, which is not described in detail due to the space limitations. A skilled person in this field is able to combine the elements made from various materials to make the total weight of the guard assembly 30 and the pressing plate assembly 32 less than 1kg. For example, the bracket 52, the extending arm 54 and the extending guard 55 are made of aluminum alloy and the other elements (except the necessary screws) are made of plastics.

The worktable 22 is also provided with a longitudinal T-slot 44 and a transverse T-slot 45. The longitudinal T-slot 44 extends from the front portion to the rear portion of the worktable 22. The transverse T-slot 45 is positioned on the front side of the opening 40 and intersected with the longitudinal T-slot 44 to divide the upper surface 36 of the whole worktable into four parts. The transverse T-slot 45 and the longitudinal T-slot 44 respectively extend from one sidewall of the worktable 22 to reach the other parallel sidewall. The cross sections of the longitudinal T-slot 44 and the transverse T-slot 45 are identical and the bottoms are also provided with several through-holes at intervals along the extension direction of the T-slot for connecting with a fixing ruler (not shown in the figure).

The upper surface 36 has an area of less than 0.18m², a width W parallel to the extension direction of the transverse T-slot 45 and a length L with respect to the width W. In this embodiment, the upper surface 36 has an area of 0.172m², a width of 0.4m and a length of 0.43m. Such configuration gives the volume of the worktable 22 a limited range and meets the demands of the user.

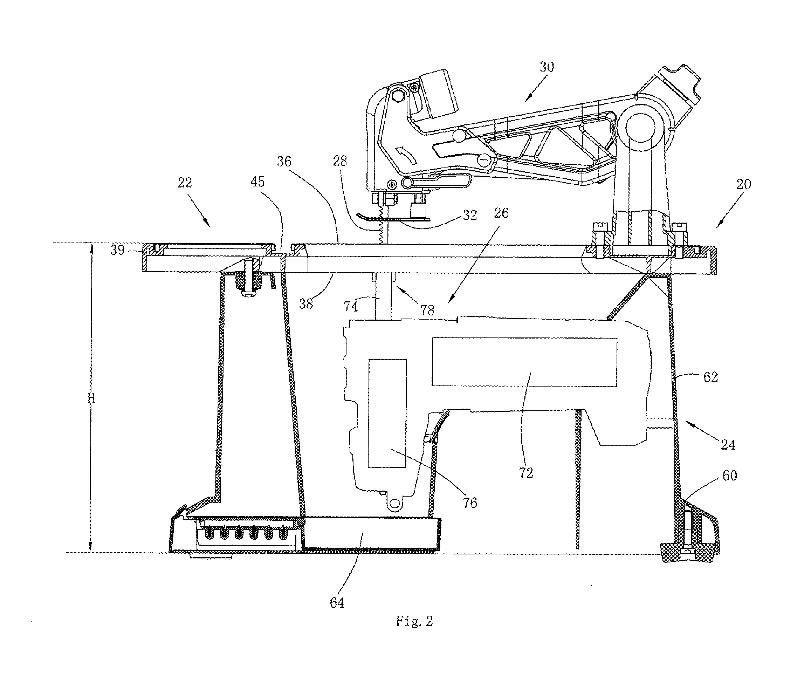

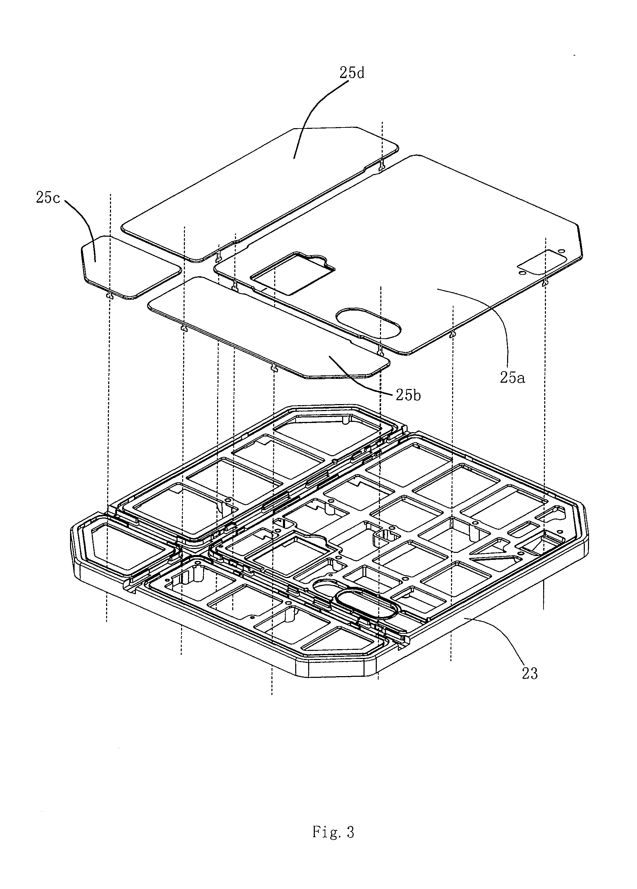

The worktable 22 is made from a metal material and has a total weight of less than 2kg. In this embodiment, as shown in figures 1, 2, and 3, the worktable 22 comprises a frame 23 and panels 25a, 25b, 25c and 25d mounted on the frame 23, the frame 23 is made of the aluminum alloy, and the panels 25a, 25b, 25c and 25d are made of stainless steels, and the whole weight of the worktable 22 is 1.5kg. Such configuration makes the worktable 22 light, and the upper surface 36 mainly comprised of the panels 25a, 25b, 25c and 25d with highly wear resistant. Certainly, the frame 23 and the panels 25a, 25b, 25c and 25d are also capable of being made of other materials, for example, the frame 23 is made from cast iron and the panels are made of bronze, which should belong to the protection scope of the present invention as along as the functions and effects thereof are the same or similar to those of the present invention.

The cutting mechanism 26 is fixed on the lower surface 38 of the worktable 22 and received in the supporting unit 24 and comprises a motor 72 outputting rotation motion, a reciprocating rod 74 driving the saw blade 28 that passes through the opening 40 to move reciprocatedly, a motion conversion mechanism 76 converting the rotation driving of the motor 72 into the reciprocating motion of the reciprocating rod 74, and a saw blade clamp 78 operable for clamping and releasing the saw blade 28. The saw blade clamp 78 comprises an operable element 80 positioned on the worktable 22 or on the supporting unit 24.

The whole weight of the cutting mechanism 26 is less than 3kg. In this embodiment, the weight of the cutting mechanism 26 is 2.5kg.

The supporting unit 24 comprises a base 60 with several supporting feet 58 and supporting walls 62. In this embodiment, the worktable 22 and the base 60 are approximately square, the four supporting feet 58 with partly conical ends are respectively disposed on the four angles of the base 60, and the supporting walls 62 are mounted between two adjacent supporting feet 58, and the supporting feet 58 protrude the planes where the supporting walls 62 exist.

A drawer 64 is disposed at the front portion of the supporting unit 24 for collecting the dust. The front supporting feet of the base 60 are respectively provided with a main switch 68 and a speed adjusting switch 70 of the cutting machine. In this embodiment, the supporting unit 24 has the supporting walls, however skilled persons in this field should understand that the worktable 22 and the cutting mechanism 26 are capable of being supported by several supporting feet. Therefore, the supporting unit 24 in the present invention may also be a bracket consisting of the supporting feet.

The worktable 24 is made from a metal material and is less than 2kg weight. In this embodiment, the supporting base 24 is made of plastics and 1.8kg weight. Such configuration gives the supporting unit 24 high stress intensity and light weight.

The cutting machine 20 has a height H, namely the distance from the surface, opposite to the worktable 22, of the supporting unit 24 to the upper surface 36, and the height H is less than 0.3m, preferably 0.24m. When the guard assembly 30 is not installed, the cutting machine 20 at most occupies a space of 0.0516m³, but in this embodiment, the space is 0.04128m³. It can be seen that, compared with the traditional table-type tools, the cutting machine 20 occupies a smaller space and has a compacter structure.

The invention solves the technical problems of large volume, large weight and inconvenient carrying and transportation of the traditional tools. By configuring the structure and the material, the cutting machine 20 is less than 15kg weight and has high convenience. In this embodiment, the cutting machine 20 is 6.45kg weight, and together with the regular wires and cables, is less than 9kg weight. Such configuration reduces volume and weight of the cutting machine 20, and facilitates carrying and transportation and brings convenience for the user.

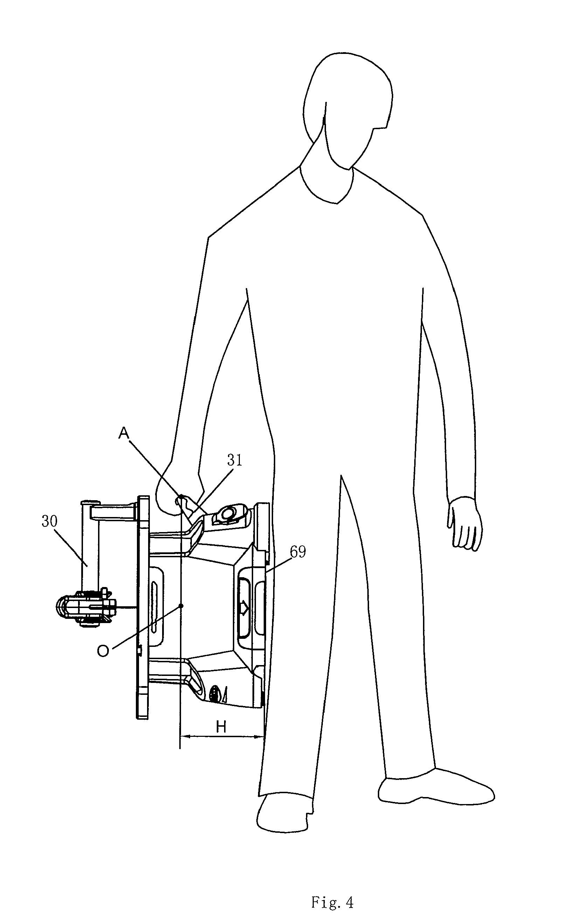

As shown in figure 4, the cutting machine 20 has a gravity centre O. To make access better and saving labor when carrying, when someone carries the cutting machine 20, it is suggested that the distance from the gravity centre O of the cutting machine 20 to the human body is controlled within a certain range. Due to high mass, there is always an outer surface of the cutting machine 20 close to a certain part of the human body, for example, waist, legs, etc., when carrying the cutting machine 20, so control over the distance from the gravity centre O to the outer surface of the cutting machine 20 close to the human body means control over the distance from the gravity centre O of the cutting machine 20 to the human body. The distance from the gravity centre O to the human body refers to the distance from the gravity centre of the cutting machine to the part, close to the cutting machine, of the human body.

The outer surface of the cutting machine comprises an upper surface 36 of the worktable, the base bottom surface 69 and the supporting wall surface. The supporting wall surface may be the supporting wall surface 62 as shown in the figure 1, or a virtual outer surfaces, for example, during carrying, if the supporting wall 62 is not close to a certain part of the human body, then the surface consisting of the outer edges of the upper surface 36 of the worktable and the base bottom face 69 corresponding to the supporting wall is defined as the supporting wall surface, as shown in figure 1, or if the user stands at the front of the cutting machine (the left side as shown in figure 1) when carrying the cutting machine, the surface defined by the front outer edges of the upper surface 36 of the worktable and the base bottom face 69 is the supporting wall surface of the cutting machine.

In this embodiment, the distance from the gravity centre O of the cutting machine 20 to the upper surface 36 of the worktable, the base bottom face 69 or the supporting wall surface is less than or equal to 0.24m, preferably less than 0.1m. If the distance from the gravity centre O of the cutting machine 20 to the upper surface 36 of the worktable, the base bottom face 69 or the supporting wall surface is less than or equal to 0.1m, the distance from the gravity centre O of the cutting machine 20 to the part, close to the cutting machine, of the human body is also less than or equal to 0.1m, which puts the user close to the gravity centre of the cutting machine and makes carrying labor-saving.

To carry the cutting machine 20 conveniently, as shown in figure 1 and figure 4, the cutting machine 20 is provided with a handle portion. The handle portion in this embodiment is a handle 31 placed on the supporting unit 24, preferably positioned on the supporting wall 62, the handle 31 is provided with a guide rail 46, the supporting wall is provided with a sliding groove 48, and the handle 31 can be installed or dismantled by the guide rail 46 sliding in the sliding groove 48 of the supporting wall 62. The skilled persons in this field know that the handle 31 in this embodiment may also be connected with the supporting unit by means of screws. There are more ways to position the handle portion, for example, an opening running through the upper surface 36 and the lower surface 38 can be formed at a position of the worktable 22 close to the outer surface thereof, so the user is able to lift the cutting machine through the opening.

As shown in figure 4, when the user lifts the cutting machine through the handle 31, the straight line which passes through the gravity centre O and is vertical to the ground surface must pass through a certain point of the handle, the point is the most stressed point on the handle 31 and is called stress point A in this embodiment, and the distance from any point on the connecting line AO between the stress point A and the gravity centre O to the upper surface 36 of the worktable or the base bottom surface 69 is less than or equal to 0.1m, preferably, the distances from points on the connecting line AO to the upper surface 36 of the worktable or the base bottom face 69 are the same, which means that the connecting AO is parallel to the upper surface 36 of the worktable or the base bottom face 69, at this moment, when lifting the cutting machine, the relative horizontal plane of the upper surface 36 or the base bottom face 69 is vertical and not inclined and therefore makes access to the human body better.

As shown in figure 4, the gravity centre O of the cutting machine is close to the base bottom face 69 in this embodiment; the guard assembly 30 on the worktable 22 is kept on the worktable 22 and occupies a certain space; besides, the outer surface, formed by the supporting feet 58 and the supporting wall 62 of the cutting machine 20 is irregular, the distance H from the gravity centre O to the outer surface, namely the base bottom face 69, of the base 60 of the cutting machine 20 is configured to be less than or equal to 0.24m, preferably about equal to 0.1m.

To provide a good user interface, the handle 31 in this embodiment has a gripping portion which extends longitudinally, and the extension direction of the gripping portion is parallel to not only the plane where the attached supporting wall 62 exists, but also the base bottom face 69. When the user prepares to carry the cutting machine 20 and places the cutting machine 20 upside down to places the handle 31 upwards, such configuration of the handle 31 and flat base bottom face 69 guide the user to stand close to the bottom face 69 of the base 60, and when the user grips the handle 31 conveniently, the distance from the gravity centre O to the human body is short.

To make the piece strong enough, the body of the handle 31 is made from a solid material, and a reinforcing rib is disposed in the handle 31; to allow the user to carry the cutting machine 20 by the handle 31 more comfortably, the gripping portion of the handle 31 is provided with an elastic cladding, for example, a rubber pad, a soft PVC pad, etc.

To avoid increasing the packaging volume of the cutting machine, the area surrounded by the supporting wall 62 is less than the areas of the worktable 22 and the base 60, the handle 31 is disposed on the supporting wall 62, and the outer edge of the handle 31 is positioned within the outer edge of the upper surface 36 of the worktable or the base bottom face 69.

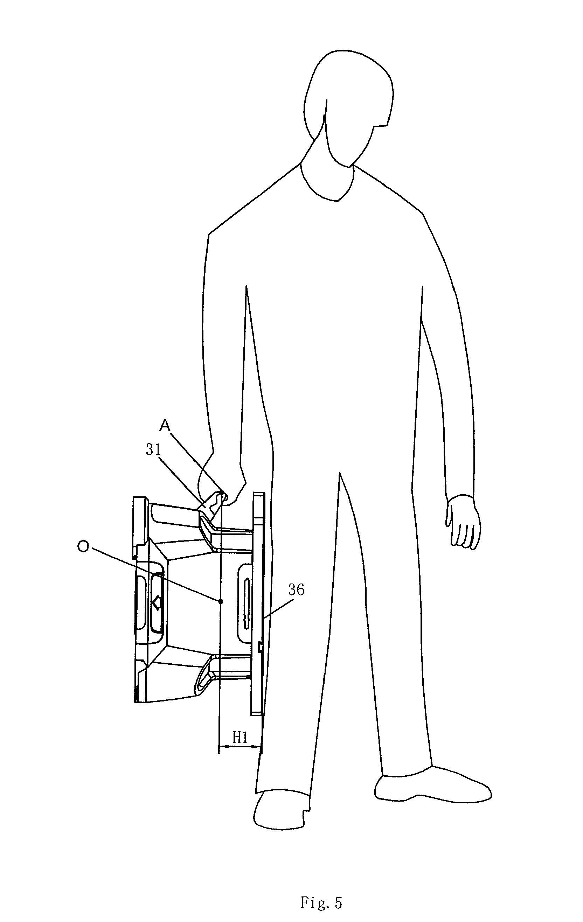

The figure 5 provides a schematic view of the carrying of the cutting machine in the second embodiment of the present invention. The difference between this embodiment and the first embodiment is that: during carrying, the guard assembly 30 is dismantled from the worktable 22 first, the cutting machine 20 is placed upside down to make the handle 31 upward then, because the upper surface 36 of the worktable 22 is a plane, the user may stand close to the upper surface 36 of the worktable 22, and if the distance H1 from the gravity centre O to the upper surface 36 of the worktable is set to be less than or equal to 0.24m, then better access to the human body is capable of being realized.

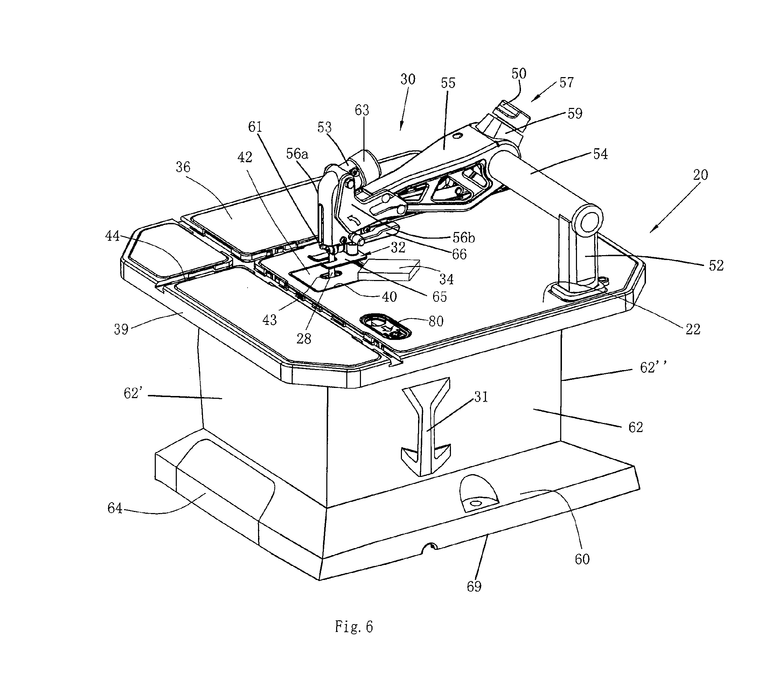

The figure 6 provides a three-dimensional schematic view of the cutting machine in the third embodiment of the present invention. The difference between this embodiment and the first embodiment is that: there are no supporting feet 58, the main switch and the speed adjusting switch originally disposed on the supporting feet 58 may be disposed at proper positions (not shown in the figure), there are only 4 two-dimensional supporting walls between the worktable 22 and the base, and the area surrounded by the supporting walls is less than the areas of the worktable 22 and the base 60. The handle 31 is positioned on one of the supporting walls 62, the width of the adjacent supporting wall 62' is enough to allow direct access to the human body and prevent the blockage of the outer edge of the worktable 22 or the base 60, and the distance from the gravity centre O to the adjacent supporting wall 62' is less than or equal to 0.24m. In this embodiment, the handle 31 has a gripping portion which extends longitudinally, the extension direction of the gripping portion is parallel to the supporting wall 62 and the supporting wall 62', the gravity centre O is closer to the supporting wall 62' instead of the opposite supporting wall 62" of the supporting wall 62', so the handle 31 is capable of being disposed close to the supporting wall 62', which guides the user to stand close to the supporting wall 62', and the distance from the gravity centre O to the human body is short when the user lifts the handle 31 conveniently. If the adjacent supporting wall 62' is too narrow to allow direct access to the human body, the face which consisting of the outer edges of the upper surface 36 of the worktable and the base bottom face 69 corresponding to the supporting wall 62' is the defined to be the supporting wall surface of the cutting machine 20, so the distance from the gravity centre O to the defined supporting wall surface is set to be less than or equal to 0.24m.

The invention also has other embodiment substitutes, for example, when the distance from the upper surface 36 of the worktable 22 to the base bottom face 69 is less than 0.48m, the gravity centre O is capable of being disposed on the central position between the upper surface 36 and the base bottom face 69, and then the distances from the gravity centre O to the upper surface 36 and the base bottom face 69 are both less than 0.24m. The handle 31, parallel to the upper surface 36 and the base bottom face 69, is positioned at a middle position of the supporting wall 62, when the user lifts the cutting machine via the handle 31, better access to the human body is capable of being realized no matter whether the upper surface 36 of the worktable 22 or the base bottom face 69 is close to the human body.

The above description only illustrates some preferable embodiments of the present invention, which shall not limit the present invention, and any technical scheme obtained by adopting equivalent replacement or equivalent transformation shall be within the protecting scope of the present invention.

## Claims

1. A cutting machine, comprising:
a worktable including an opening and an upper surface for supporting a workpiece;
a supporting unit for supporting the worktable;
a cutting mechanism mounted on a lower surface of the worktable and contained within the supporting unit comprising: a motor for outputting a rotation motion; a reciprocating rod driving a saw blade moving reciprocately through the opening; a motion conversion mechanism converting the rotation motion of the motor into a reciprocating motion of the reciprocating rod;
and a saw blade clamp for clamping and releasing the saw blade.

2. The cutting machine of claim 1, wherein the whole weight of the cutting machine is less than 15kg.

3. The cutting machine of claim 1, wherein the worktable is made of metal, and the whole weight of the worktable is less than 2kg.

4. The cutting machine according to any one of claim 1 to claim 3, wherein the area of the upper surface is less than 0.18m², the distance from the surface of the supporting unit opposite to the worktable to the upper surface is less than 0.3m.

5. The cutting machine of claim 4, wherein the weight of the supporting unit is less than 2kg.

6. The cutting machine according to any one of claim 1 to claim 5, wherein the cutting machine comprises a guard assembly mounted on the upper surface, a pressing plate assembly disposed on the guard assembly, the whole weight of the guard assembly and the pressing plate assembly is less than 1 kg.

7. The cutting machine of claim 6, wherein the guard assembly has a farthest end which is farthest to the worktable, the distance from the farthest end to the surface of the supporting unit opposite to the worktable is not more than 0.37m.

8. A cutting machine, comprising:
a worktable including an opening and an upper surface for supporting a workpiece;
a base has a bottom surface;
supporting walls disposed between the worktable and the base, the supporting walls have outer surface;
a cutting mechanism mounted on a lower surface of the worktable and received in the supporting walls comprising: a motor for outputting a rotation motion; a reciprocating rod driving a saw blade moving reciprocately through the opening; a motion conversion mechanism converting the rotation motion of the motor into a reciprocating motion of the reciprocating rod; and a saw blade clamp for clamping and releasing the saw blade;
the distance from the gravity centre of the cutting machine to at least one of the upper surface, the bottom surface and outer surface is not more than 240mm.

9. The cutting machine of claim 8, wherein the cutting machine further comprises a handle portion, when the cutting machine is lift through the handle portion, the distance from any point of the connecting line that is formed by linking from the gravity centre with the stressing point of the handle portion to the upper surface or the bottom surface is not more than 100mm.

10. The cutting machine of claim 9, wherein when the cutting machine is lifted through the handle portion, the connecting line is parallel to the upper surface or the bottom surface.

11. The cutting machine of claim 9 or claim 10, wherein the handle portion is positioned on the supporting wall, the handle portion has a gripping portion which extends longitudinally, the extension direction of the gripping portion is at least parallel to one of the upper surface, the bottom surface and the outer surface.

12. The cutting machine of claim 11, wherein the distance from the gravity centre of the cutting machine to the bottom surface is not more than 100mm; the extension direction of the gripping portion is parallel to the bottom surface.

13. The cutting machine of claim 11, wherein a guard assembly is detachablly disposed on the worktable.

14. The cutting machine of claim 13, wherein when the guard assembly is disassembled from the worktable, the distance from the gravity centre of the cutting machine to the upper surface is not more than 100mm; the extension direction of the gripping portion is parallel to the upper surface.

15. The cutting machine of claim 9, wherein the handle portion is disposed on a supporting wall, the distance from the gravity centre of the cutting machine to the abut supporting wall which is disposed adjacent to the supporting wall that the handle portion is not more than 100mm; the handle portion has a gripping portion which extends longitudinally, the extension direction of the gripping portion is parallel to the abut supporting walls.
